# EUROPÄISCHE PATENTSCHRIFT

(11) **EP 1 684 187 B1**
(45) Veröffentlichungstag und Bekanntmachung des Hinweises auf die Patenterteilung: **27.02.2008**
(21) Anmeldenummer: 05113055.7
(22) Anmeldetag: 29.12.2005
(51) Int. Cl.: G06F 13/40

(54) **Spannungsversorgungsvorrichtung für ein Busgerät**
Power supply apparatus for a bus device
Dispositif d'alimentation en tension destiné à un appareil à bus

(30) Priorität: 20.01.2005 DE 102005002752
(43) Veröffentlichungstag der Anmeldung: 26.07.2006
(73) Patentinhaber: SIEMENS AKTIENGESELLSCHAFT, 80333 München (DE)
(72) Erfinder: Fichtner, Norbert, 84069 Schierling (DE)

(56) Entgegenhaltungen:
- EP-A- 0 942 562
- US-A- 5 818 781
- US-B1- 6 327 635

## Beschreibung

Die vorliegende Erfindung betrifft eine Spannungsversorgungsvorrichtung für ein Busgerät zur Bereitstellung einer spezifischen Ausgangsspannung bzw. eines spezifischen Ausgangsstroms.

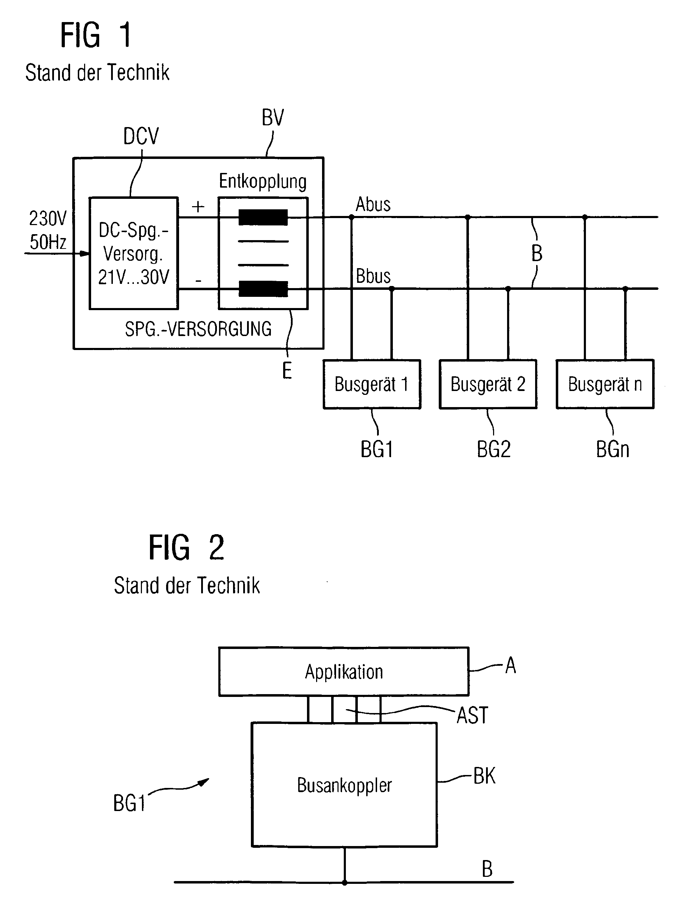

Der typische Aufbau eines Bussystems ist in FIG 1 dargestellt. Eine Vielzahl von Busgeräten BG1, BG2, ..., BGn ist beliebig an einem Bus B verteilt. Der Bus B besteht im vorliegenden Beispiel aus zwei Busleitungen Abus und Bbus. Jedes der Busgeräte BG1 bis BGn ist an beide Busleitungen Abus und Bbus angeschlossen.

Über den Bus erfolgt sowohl die Spannungsversorgung der Busgeräte BG1 bis BGn als auch die Datenübertragung. Zur Spannungsversorgung ist an den Bus eine Busversorgung BV angeschlossen. Die Busversorgung BV enthält ein Gleichspannungsversorgungsmodul DCV, das die übliche Netzspannung von 230 V, 50 Hz in eine Gleichspannung im Bereich von 21 V bis 30 V umsetzt. Dem Ausgang des Gleichstromversorgungsmoduls DCV ist eine Entkopplungseinheit E nachgeschaltet, die unter anderem zur Begrenzung der Steilheit des Stromanstiegs dient. Der Ausgang der Entkopplungseinheit E ist an die Busleitungen A-bus und Bbus angeschlossen.

In FIG 2 ist ein Busgerät BG1 im Detail dargestellt. Es besteht aus einer Applikation A, die über eine Anwenderschnittstelle AST mit einem Busankoppler BK verbunden ist. Der Bus B ist hier lediglich mit einer Leitung symbolisiert. Bei dem Bus B kann es sich beispielsweise um einen EIB-Bus handeln. An einer Standard-EIB-Anwenderschnittstelle AST des Busankopplers BK werden typischerweise 5 V/10 mA (maximal 25 mA) und 20 V/5 mA zur Verfügung gestellt. Diese Spannungen werden in der Regel von einer integrierten Schaltung aus dem EIB geliefert.

Falls die zur Verfügung gestellte Leistung bzw. der zur Verfügung gestellte Strom für die gewünschte Applikation nicht ausreicht, ist eine zusätzliche Spannungsversorgung erforderlich. Diese kann entweder aus dem Bus gespeist werden oder es ist ein separates Netzteil, das aus dem Netz mit 230 V gespeist wird, notwendig. In beiden Fällen ist der zusätzliche Aufwand sehr hoch. Im ersten Fall müsste ein spezieller Busankoppler, der sowohl konstruktiv als auch schaltungstechnisch zu bearbeiten ist, bereitgestellt werden. Im zweiten Fall wäre ein Netzteil mit 230 V-Speisung, das in die Applikation integriert ist, zu entwickeln.

Wird beispielsweise für eine spezielle Applikation (HF-Sender/Empfänger) ein Strom bis zu 50 mA bei einer Versorgungsspannung von 2,2 bis 3,6 V benötigt, so ist dies über die bekannten Busankoppler nicht möglich. In dem gewählten Beispiel wäre die erforderliche Stromaufnahme der Applikation vom jeweiligen Betriebsmodus abhängig. Dies bedeutet konkret, dass z. B. für das Senden 2,2 V/50 mA, für den Empfang 2,2 V/30 mA und für die Flashprogrammierung 2,7 V/6 mA benötigt werden. Ferner kann notwendig sein, dass die Applikation auch auf Anwenderschnittstellen mit 4 V/50 mA (Dimmer UP) aufsteckbar sein muss.

Aus der US 6327635 B1 ist eine Steckkarte bekannt, die in der Lage ist, von einem Bus zwei verschiedene Spannungen abzugreifen und eine davon für die Versorgung der Karte auszuwählen.

Die Aufgabe der vorliegenden Erfindung besteht somit darin, eine verbesserte Spannungsversorgung für mehrere verschiedenartige Busgeräte bereitzustellen.

Erfindungsgemäß wird diese Aufgabe gelöst durch eine Spannungsversorgungsvorrichtung für ein Busgerät mit einer Aufnahmeeinrichtung zur Aufnahme einer ersten Spannung eines ersten Versorgungsanschlusses eines Busses und einer zweiten Spannung eines zweiten Versorgungsanschlusses eines Busses, einer Spannungswandlereinrichtung zur Erzeugung einer Ausgangsspannung aus der aufgenommenen ersten und zweiten Spannung und einer Steuereinrichtung zum Steuern oder Regeln der Ausgangsspannung in Abhängigkeit von mindestens einem Steuersignal. Die Steuereinrichtung steuert einen Modus des Busgeräts und in Abhängigkeit von dem Modus die Ausgangsspannung.

In vorteilhafter Weise kann damit eine applikationsspezifische Versorgungsspannung Uvcc aus den an der Anwenderschnittstelle AST zur Verfügung stehenden Spannungen unter Verwendung eines DC/DC-Konverters vorzugsweise mit niedriger Dropout-Spannung (Differenzspannung zwischen Eingangs- und Ausgangsspannung) gewonnen werden.

Eine besonders bevorzugte Ausführungsform besteht darin, dass ein elektrischer Widerstand zwischen den ersten und zweiten Spannungsversorgungsanschluss geschaltet ist. Speziell eignet sich für den Widerstand ein ohmscher Widerstand. Dadurch können die beiden zur Verfügung gestellten Versorgungsanschlüsse kombiniert werden, so dass ein erhöhter Ausgangsstrom erzielbar ist.

Die Steuereinrichtung kann einen Mikrokontroller umfassen. Dadurch kann die Ausgangsspannung bzw. der Ausgangsstrom sehr flexibel gesteuert bzw. geregelt werden.

Günstigerweise repräsentiert das Steuersignal einen Betriebsmodus der Spannungsversorgungsvorrichtung. Dieser Betriebsmodus ist beispielsweise ein Sendemodus, ein Empfangsmodus oder ein Programmiermodus, z. B. für die Flashprogrammierung. Dadurch kann die zur Verfügung stellende Ausgangsspannung direkt an den Betriebsmodus der Applikation angepasst werden.

Ferner kann die Spannungsversorgungseinrichtung eine Messeinrichtung zum Messen der ersten und/oder zweiten Spannung und zum Liefern eines entsprechenden Steuersignals an die Steuereinrichtung zur Einstellung der Ausgangsspannung umfassen. Dadurch kann für die Erzeugung der Ausgangsspannung nicht nur ein Betriebsmodus der zu versorgenden Applikation, sondern auch die zur Verfügung stehenden Spannungen selbst berücksichtigt werden.

Die vorliegende Erfindung ist anhand der beigefügten Zeichnungen näher erläutert, in denen zeigen:
- FIG 1: einen Installationsbus mit Spannungsversorgungseinheit gemäß dem Stand der Technik;
- FIG 2: ein Busgerät gemäß dem Stand der Technik;
- FIG 3: ein erfindungsgemäßes Busgerät; und
- FIG 4: eine erfindungsgemäße Kopplung zweier zur Verfügung stehender Spannungen.

Die nachfolgend näher geschilderten Ausführungsbeispiele stellen bevorzugte Ausführungsformen der vorliegenden Erfindung dar.

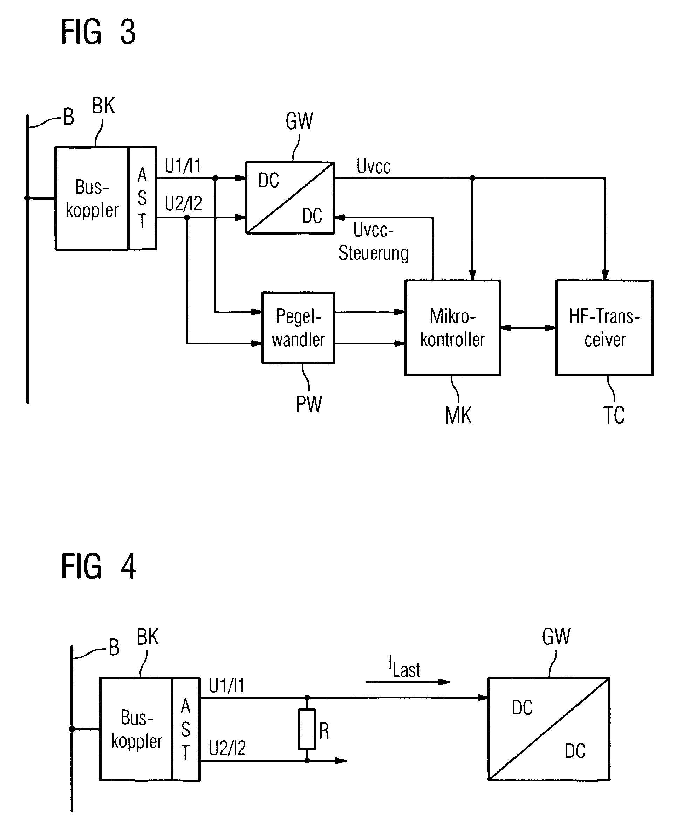

FIG 3 zeigt schematisch den Aufbau eines Busgeräts gemäß der vorliegenden Erfindung. Auch hier ist der Bus B lediglich mit einer Leitung symbolisiert. Der an den Bus B angeschlossene Buskoppler BK weist eine Anwenderschnittstelle AST auf. An der Anwenderschnittstelle AST werden an einem ersten Versorgungsanschluss die Spannung U1 und der Strom I1 und an einem zweiten Versorgungsanschluss die Spannung U2 und der Strom 12 zur Verfügung gestellt. Typischerweise ist bei Ankopplung an einen EIB-Bus U1 = 5 V, I1 = 25 mA und U2 = 20 V, 12 = 5 mA.

Um im Vergleich zu den Spannungen U1 und U2 zu einer niedrigeren Ausgangsspannung Uvcc zu gelangen, wird ein DC/DC-Konverter bzw. Gleichspannungswandler GW eingesetzt. Ein wesentlicher Aspekt des DC/DC-Konverters ist eine möglichst kleine Dropout-Spannung. Sie darf nicht größer als U1 - Uvcc bzw. U2 - Uvcc sein.

Die Ausgangsspannung Uvcc wird von einem Mikrokontroller MK gesteuert. Dieser stellt die Ausgangsspannung Uvcc in Abhängigkeit des jeweiligen Modus des Busgeräts ein. Das in FIG 3 gewählte Beispiel beinhaltet einen HF-Transceiver TC. Der HF-Transceiver TC wird wie der Mikrokontroller MK von der Ausgangsspannung Uvcc des Gleichspannungswandlers GW versorgt. Über eine bidirektionale Datenverbindung stellt der Mikrokontroller den Modus des HF-Transceivers ein. Der Gleichspannungswandler wird entsprechend eingestellt, so dass er den Gleichspannungswandler GW entsprechend ansteuern kann. Beispielsweise stellt der Mikrokontroller MK die Versorgung zum Senden auf 2,2 V/50 mA, zum Empfangen auf 2,2 V/30 mA und zur Flashprogrammierung auf 2,7 V/6 mA.

Die Einstellung der Ausgangsspannung Uvcc kann auch in Abhängigkeit der zur Verfügung stehenden Spannungen U1 und U2 vorgenommen werden, indem diese über einen Pegelwandler PW gemessen und entsprechende Messsignale an den Mikrokontroller MK übermittelt werden. Dabei wird die Ausgangsspannung Uvcc unmittelbar nach einem Reset immer auf den minimal zulässigen Wert eingestellt.

Reicht, wie im vorliegenden Beispiel für den HF-Transceiver TC der typischerweise von einem EIB-Bus zur Verfügung gestellte Strom aus einem Versorgungsanschluss nicht aus, so können gemäß FIG 4 die beiden Versorgungsanschlüsse der Anwenderschnittstelle AST kombiniert werden. Diese Kombination erfolgt kostengünstig durch einen ohmschen Widerstand R, so dass sich die Ströme I1 und I2 der beiden Versorgungsanschlüsse zu einem Laststrom I_{Last} aufsummieren. Wenn beispielsweise U1 = 5 V und U2 = 20 V ist, fällt über den Widerstand R eine Spannung von 15 V ab. Der Widerstand R ist dann so zu dimensionieren, dass über ihn ein Strom 12 fließt, der zusammen mit dem Strom I1 den gewünschten Laststrom I_{Last} ergibt.

### Die allgemeine Bedingung lautet daher:

R = (U2 - U1)/I2, wobei I_{Last} ≥ I2 und U2 > U1 ist. Wenn beispielsweise der zusätzliche Strom 12 maximal 5 mA betragen soll, so müsste der Widerstand R 3kΩ betragen, wenn die Spannungsdifferenz U2 - U1 gemäß dem obigen Beispiel 15 V beträgt. Der resultierende Laststrom I_{Last} dient als Eingangsstrom des DC/DC-Konverters GW. Damit kann ohne zusätzliches Netzteil in dem Busgerät ein ausreichend hoher Strom zur Verfügung gestellt werden.

## Patentansprüche

1. Spannungsversorgungsvorrichtung für ein Busgerät (BG1 bis BGn) mit
- einer Aufnahmeeinrichtung zur Aufnahme einer ersten Spannung (U1) eines ersten Versorgungsanschlusses eines Busses (B) und einer zweiten Spannung (U2) eines zweiten Versorgungsanschlusses des Busses (B),
- einer Spannungswandlereinrichtung (GW) zur Erzeugung einer Ausgangsspannung (Uvcc) aus der aufgenommenen ersten und zweiten Spannung (U1, U2) und
- einer Steuereinrichtung (MK) zum Steuern oder Regeln der Ausgangsspannung (Uvcc) in Abhängigkeit von mindestens einem Steuersignal,
**dadurch gekennzeichnet, dass** die Steuereinrichtung (MK) einen Modus des Busgeräts (BG1 bis BGn) und in Abhängigkeit von dem Modus die Ausgangsspannung (Uvcc) steuert.

2. Spannungsversorgungsvorrichtung nach Anspruch 1, wobei ein elektrischer Widerstand (R) zwischen den ersten und zweiten Spannungsversorgungsanschluss geschaltet ist.

3. Spannungsversorgungsvorrichtung nach Anspruch 2, wobei der elektrische Widerstand (R) ein ohmscher Widerstand ist.

4. Spannungsversorgungsvorrichtung nach einem der vorhergehenden Ansprüche, wobei die Steuereinrichtung (MK) einen Mikrokontroller umfasst.

5. Spannungsversorgungsvorrichtung nach einem der vorhergehenden Ansprüche, wobei das Steuersignal einen Betriebsmodus der Spannungsversorgungsvorrichtung repräsentiert.

6. Spannungsversorgungsvorrichtung nach Anspruch 5, wobei der Betriebsmodus ein Sendemodus, ein Empfangsmodus oder ein Programmiermodus ist.

7. Spannungsversorgungsvorrichtung nach einem der vorhergehenden Ansprüche, die eine Messeinrichtung (PW) zum Messen der ersten und/oder zweiten Spannung (U1, U2) und zum Liefern eines entsprechenden Steuersignals an die Steuereinrichtung zur Einstellung der Ausgangsspannung umfasst.

8. Busgerät mit einer Spannungsversorgungsvorrichtung nach einem der vorhergehenden Ansprüche.

## Claims

1. Power supply apparatus for a bus device (BG1 to BGn) with
- a receiving device for receiving a first voltage (U1) of a first supply connection of a bus (B) and a second voltage (U2) of a second supply connection of the bus (B),
- a direct current converter (GW) for creating an output voltage (Uvcc) from the received first and second voltage (U1, U2) and
- a control device (MK) for controlling or regulating the output voltage (Uvcc) as a function of at least one control signal,
**characterized in that** the control device (MK) controls a mode of the bus device (BG1 to BGn) and controls the output voltage (Uvcc) as a function of the mode.

2. Power supply apparatus according to claim 1, with an electrical resistor (R) being connected between the first and second power supply connection.

3. Power supply according to claim 2, with the electrical resistor (R) being an ohmic resistor.

4. Power supply apparatus according to one of the previous claims, with the control device (MK) including a microcontroller.

5. Power supply apparatus according to one of the previous claims, with the control signal representing an operating mode of the power supply apparatus.

6. Power supply apparatus according to claim 5, with the operating mode being a transmit mode, a receive mode or a programming mode.

7. Power supply apparatus according to one of the previous claims that includes a measuring device (PW) for measuring the first and/or second voltage (U1, U2) and for delivering a corresponding control signal to the control device for setting the output voltage.

8. Bus device with a power supply apparatus according to one of the previous claims.

## Revendications

1. Dispositif d'alimentation en tension pour un appareil à bus (BG1 à BGn) comprenant
- un dispositif de réception pour la réception d'une première tension (U1) d'un premier branchement d'alimentation d'un bus (B) et d'une seconde tension (U2) d'un second branchement d'alimentation du bus (B),
- un dispositif convertisseur de tension (GW) pour générer une tension de sortie (Uvcc) à partir de la première et de la seconde tensions (U1, U2) réceptionnées et
- un dispositif de commande (MK) pour la commande ou le réglage de la tension de sortie (Uvcc) en fonction d'au moins un signal de commande,
**caractérisé en ce que** le dispositif de commande (MK) commande un mode de l'appareil de bus (BG1 à BGn) et, en fonction du mode, la tension de sortie (U_{VCC}).

2. Dispositif d'alimentation en tension selon la revendication 1, une résistance électrique (R) étant montée entre le premier et le second branchements d'alimentation en tension.

3. Dispositif d'alimentation en tension selon la revendication 2, la résistance électrique (R) étant une résistance ohmique.

4. Dispositif d'alimentation en tension selon l'une quelconque des revendications précédentes, le dispositif de commande (MK) comprenant un microcontrôleur.

5. Dispositif d'alimentation en tension selon l'une quelconque des revendications précédentes, le signal de commande représentant un mode d'exploitation du dispositif d'alimentation en tension.

6. Dispositif d'alimentation en tension selon la revendication 5, le mode de service étant un mode d'émission, un mode de réception ou un mode de programmation.

7. Dispositif d'alimentation en tension selon l'une quelconque des revendications précédentes, qui comprend un dispositif de mesure (PW) pour la mesure de la première et/ou de la seconde tensions (U1, U2) et pour la livraison, au dispositif de commande, d'un signal de commande correspondant pour le réglage de la tension de sortie.

8. Appareil à bus comprenant un dispositif d'alimentation en tension selon l'une quelconque des revendications précédentes.
